# EUROPEAN PATENT SPECIFICATION

(11) **EP 4 529 410 B1**
(45) Date of publication and mention of the grant of the patent: **10.06.2026**
(21) Application number: 23727109.3
(22) Date of filing: 23.05.2023
(51) Int. Cl.: A01G 9/24, A01G 18/69

(54) **RACK COMPRISING A HEAT EXCHANGER FOR TEMPERATURE CONTROL OF A SUBSTRATE FOR CULTIVATING HORTICULTURAL PRODUCTS**
GESTELL MIT WÄRMETAUSCHER ZUR TEMPERATURREGELUNG EINES SUBSTRATS ZUR KULTIVIERUNG VON GARTENBAUPRODUKTEN
RACK AVEC ÉCHANGEUR DE CHALEUR POUR LA RÉGULATION DE TEMPÉRATURE D'UN SUBSTRAT POUR LA CULTURE DE PRODUITS HORTICOLES

(30) Priority: 23.05.2022 NL 2031962
(43) Date of publication of application: 02.04.2025
(73) Proprietor: Christiaens Group B.V., 5961 ND Horst (NL)
(72) Inventor: CHRISTIAENS, Martinus Leonardus Hendrikus Maria, 5961 ND Horst (NL)
(74) Representative: V.O.
(86) International application number: PCT/NL2023/050294
(87) International publication number: WO 2023/229459

(56) References cited:
- WO-A1-2014/201588
- DE-A1- 19 828 907
- FR-A1- 2 790 911
- US-A1- 2021 325 129
- US-B2- 11 083 142

## Description

The invention relates to a rack for carrying a substrate for cultivating horticultural products, wherein the rack is provided with a self-supporting heat exchanger forming the carrier surface for the substrate, according to claim 1.

Horticultural products, such as mushrooms, fruits, vegetables, or mycelium, are typically cultivated in a controlled environment, e.g. in indoor facilities, where growing conditions such as lighting, humidity and temperature can be monitored and regulated. The products are grown on a layer of substrate, such as soil, sawdust or straw, which may be supported by carrier plates, arranged on multiple levels in a rack.

The optimal temperature and humidity of the substrate may vary in time, depending on the cultivation phase of the product. For example, mild substrate conditions may be desirable in a growing phase to promote product growth, while in a harvesting phase the temperature of the substrate may be increased to reduce the humidity of the substrate, so that the harvesting process is facilitated. Controlling the temperature of the substrate may also be beneficial for other reasons, for example to optimize the growing conditions based on the type of horticultural product, the type of substrate, the nutrient uptake, seasonal aspects, and the growth stage of the product.

In conventional arrangements for cultivating horticultural products, the substrate is supported on a carrier structure, such as a carrier plate, which has a certain carrier surface area for carrying the substrate. Because of the weight of the substrate and the horticultural products growing on the substrate, the carrier structure may require a certain thickness for providing sufficient strength and stiffness, e.g. bending stiffness, across the surface area to support the substrate and horticultural products without damage or excessive deformation to the structure, e.g. when the substrate is suspended in a rack or other type of support.

Strength and stiffness for supporting the substrate and horticultural products may be provided by enclosing or sandwiching the heat exchanger within a carrier structure, e.g. by having the heat exchanger placed inside a carrier frame, or between a carrier plate and a substrate plate. However, upon heating the substrate, the carrier structure may act as a heat sink, causing part of the energy from the heat exchanger and/or the substrate to be transferred into the carrier structure. Conversely, when the heat exchanger is arranged for cooling the substrate, part of the heat stored in the carrier structure may be transferred into the heat exchanger and/or into the substrate. In such cases, the carrier structure thus acts as a heat source.

Known racks, e.g. as described in EP2564687 or WO2014/201588, comprise a rack bottom, a carrier which is supported with respect to the rack bottom for the substrate, and a heat exchanger to heat and/or cool the substrate on the carrier. Although this makes it possible to influence the temperature of the substrate to a certain degree, the controllability of the substrate temperature is still quite poor, e.g. due to the internal arrangement of components and materials used, which affects the heat transfer properties of the system as a whole. As a result, the energy efficiency of these rack systems, as well as their horticultural yield, is suboptimal.

It is an object of the invention to provide a heat exchanger, with improved controllability of the temperature of a horticultural product substrate.

### SUMMARY

In summary, the invention provides a rack according to claim 1, comprising a heat exchanger.

The heat exchanger has a structure comprising a heat exchange surface arranged for heating or cooling the substrate. The structure is arranged for supporting the substrate for thereby forming a carrier plate with a carrier surface such that the heat exchange surface forms the carrier surface. The heat exchanger comprises or is configured for cooperating with one or more mounts arranged for suspending the heat exchanger to a rack. The structure of the heat exchanger is constructed such as to be self-supporting for supporting the substrate at least between the one or more mounts, such that a bottom surface of the structure opposite the heat exchange surface faces an ambient environment.

By forming the carrier surface, the heat exchange surface directly contacts the substrate. The direct contact greatly benefits the controllability of the temperature. In addition, the self-supporting structure that supports the substrate allows the thermal mass between the heat exchanger and the substrate to be minimized and thereby thermal losses during the transfer of heat between the heat exchanger and the substrate are reduced. For example, when the heat exchanger is arranged for heating the substrate, any thermal mass contiguous to the heat exchanger (e.g. between the heat exchanger and the substrate) may act as a heat sink, thereby slowing down the heating process. Conversely, when the heat exchanger is arranged for cooling the substrate, such thermal mass may act as a heat source, thereby slowing down the cooling process. By reducing the amount of elements contiguous to the heat exchanger that may contribute to the thermal mass, the controllability of the temperature as well as the efficiency of the heat exchanger are improved. As may be appreciated, the direct manner of heating and cooling of the substrate combined with the improved efficiency of the heat exchanger due to the reduced amount of thermal mass, accumulates for a complete cultivation plant into a significant saving of energy usage, rendering the plant to be very durable and environmental friendly.

Because the structure of the heat exchanger is self-supporting, there is no need for additional support elements below the heat exchanger, in contrast to conventional heat exchanger systems, in which the heat exchanger is supported on a rack bottom. In the present invention there is no additional thermal mass below the heat exchanger. Accordingly, no heat sinks or sources are present below the heat exchanger that may disturb the heating or cooling process, and thus the controllability of the heat exchanger is improved.

The structure of the heat exchanger can comprise one or more support members, such as beams, wherein the one or more support members provide structural integrity in a direction parallel to the plane of the carrier plate. The support members can e.g. be arranged laterally, spanning between long sides of the heat exchanger, or can e.g. be arranged longitudinally, spanning between short sides of the heat exchanger, or can be arranged diagonally, spanning between corners of the heat exchanger. This allows other parts of the structure of the heat exchanger to have a lower stiffness against bending out of plane of the carrier plate, as the one or more support members can provide structural integrity to support the heat exchanger against gravitational loads, e.g. formed by the own weight of the heat exchanger, the weight of the substrate, and the weight of the horticultural products cultivated thereon.

Because of the absence of a rack bottom, there may be a risk that pieces of substrate fall through the heat exchanger structure and land on horticultural products that are cultivated on a lower level, e.g. in a rack. For this reason, the structure of the heat exchanger can form an impervious barrier, arranged for preventing passage of substrate material through the structure.

When the heat exchanger heats up or cools down the substrate, the structure of the heat exchanger will expand or contract, respectively. Considering the dimensions of the heat exchanger, which forms a carrier plate, the thermally induced expansion and contraction will be largest in plane of the carrier plate. Because the heat exchanger is mounted at or along its edges, thereby restraining the freedom of movement in plane of the carrier plate, internal stresses will arise. To compensate for thermally induced contraction or expansion of the heat exchanger, the structure can comprise an extendible section, configured to extend or shorten in plane of the carrier plate.

Preferably, the extendible section is configured to extend or shorten by elastic deformation thereof. The extendible section can e.g. comprise a biasing element, which may be integrated in the structure, or can be a separate element.

In some embodiments, the structure comprises at least two compartments, wherein the extendible section is formed by at least one compartment of the at least two compartments. In this way, elastic deformation of at least one of the compartments can compensate for thermally induced contraction or expansion of the heat exchanger, while the compartments can e.g. be used holding or directing other components of the heat exchanger, such as cables, pipes, channels, or fluids.

Each compartment of the at least two compartments can for example comprise a circumferential outer wall, providing the heat exchange surface. In this way, the thermal mass as well as the resistance against elastic deformation can be reduced by decreasing the thickness of the circumferential wall between the interior of the compartment and the substrate.

The circumferential outer wall may comprise a top portion and a bottom portion, wherein the top portion and the bottom portion may be interconnected at respective opposing end sections thereof in plane of the carrier plate, and wherein each of the top and bottom portion may comprise a middle section that is bent outwards with respect to the plane of the carrier plate. As such the heat exchange surface and the bottom surface are both corrugated, bent, or folded, thereby decreasing the resistance against elastic deformation of the compartment.

Preferably, the circumferential outer wall has a diamond shaped cross section, having a long diagonal and a short diagonal, wherein the long diagonal is in plane of the carrier plate and wherein the short diagonal is perpendicular to the plane of the carrier plate. Accordingly, expansion of the heat exchanger in plane of the plate results in elongation of the long diagonal and in shortening of the short diagonal.

To provide an impervious barrier for preventing substrate material to pass through the structure of the heat exchanger, at least one of: the at least two compartments are interconnected by elastic elements, that are elastically deformable in plane of the carrier plate; and the heat exchanger is circumferentially provided with one or more elastically deformable elements; wherein the at least two compartments are rigidly interconnected.

In some embodiments, each compartment of the at least two compartments comprises a channel, through which a fluid can flow for heating or cooling the heat exchange surface. As such, the volume inside the compartments is used for guiding the fluid.

The channel may be connectable to an energy recovery system, the energy recovery system being arranged for recovering energy from heat produced by the substrate. In this way the energy efficiency of the heat exchanger can be improved.

In some embodiments, the structure comprises one or more walls mounted to the carrier plate. In this way, a container or drawer can be formed.

The one or more mounts, for movably mounting the heat exchanger to the rack, can comprise at least one of: bearings, rails or a carriage or sled. As a result, movable mounting arrangement is provided for directly mounting the heat exchanger to the rack.

By providing a bottom side of the heat exchanger with a light source, the lighting conditions of horticultural products that are cultivated on a lower level in a rack can be controlled, while waste heat produced by the light source can be (re)used by the heat exchanger, e.g. by using the waste heat to heat the substrate or by transferring the waste heat to an energy recovery system operatively coupled to the heat exchanger.

### BRIEF DESCRIPTION OF THE DRAWINGS

The invention will be further elucidated in the figures:
FIG 1 illustrates a cross sectional view of an embodiment of a heat exchanger;
FIG 2 illustrates a cross sectional view of another or further embodiment of a heat exchanger, comprising a support member;
FIG 3 illustrates a top view of another or further embodiment of a heat exchanger;
FIG 4, illustrates a cross sectional view of another or further embodiment of a heat exchanger, comprising compartments;
FIG 5 illustrates a substrate drawer, provided with a heat exchanger as described herein;
FIG 6 illustrates a rack, provided with a heat exchanger as described herein;
FIG 7 illustrates a rack, provided with a substrate drawer as described herein.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

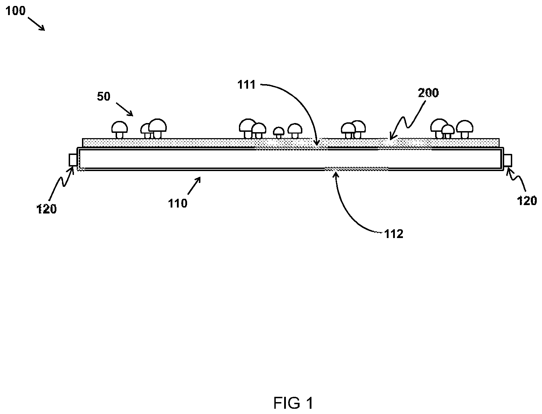

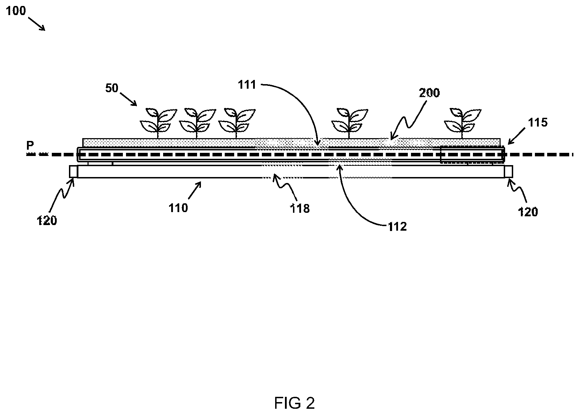

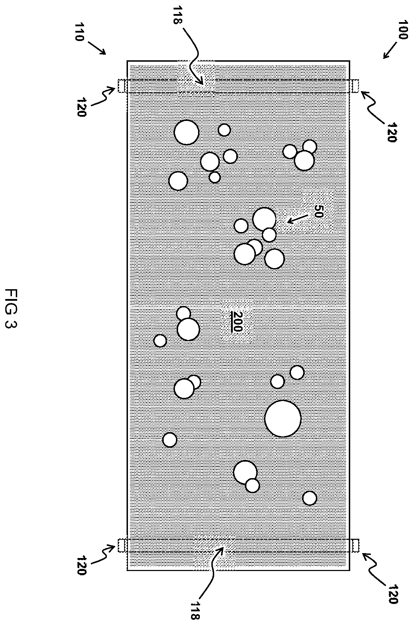

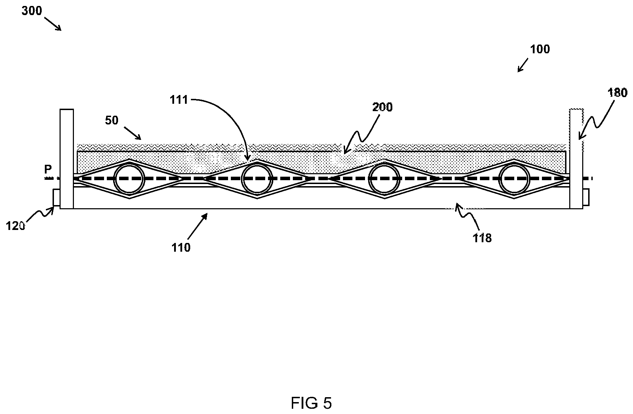

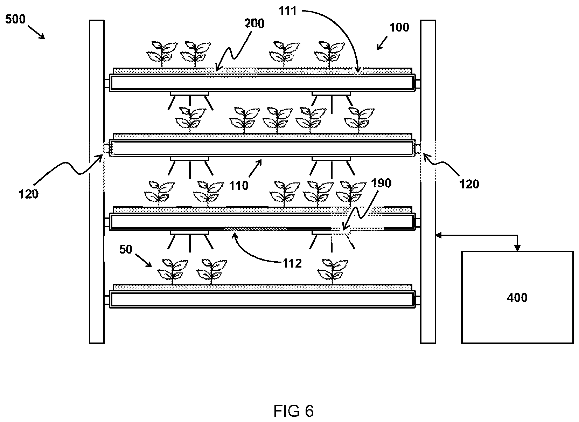

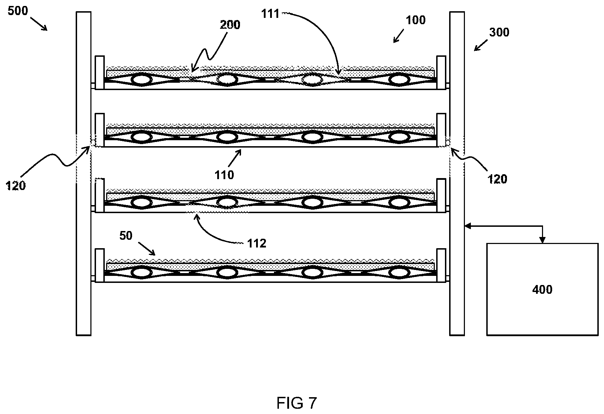

FIG 1 illustrates an embodiment of a heat exchanger 100 for temperature control of a substrate 200 for cultivating horticultural products 50, e.g. as part of a horticultural growing arrangement. The substrate 200 can for example be a layer of soil, sawdust or straw, or any other substrate material suitable for growing horticultural products 50, such as mushrooms, fruits, vegetables, herbs or mycelium. For example, the horticultural products 50 illustrated in FIGs 1, 3 represent mushrooms, the horticultural products 50 illustrated in FIGs 2 and 6 represent fruits, vegetables or herbs, and the horticultural products 50 illustrated in FIGs 5 and 7 represent mycelium. The example types of horticultural products 50 illustrated in these figures are not bound or limited to the corresponding embodiments of the heat exchanger shown in the respective figures. Other combinations of embodiment of the heat exchanger 100 and type of horticultural product 50 may be possible.

As shown in FIG 1, the heat exchanger 100 has a structure 110 that comprises a heat exchange surface 111, e.g. on the side of the heat exchanger facing the substrate 200, arranged for heating or cooling the substrate 200. For example, when growing mycelium, heat may be produced by the mycelium in the substrate 200, and the temperature of the substrate 200 can be controlled by having the heat exchanger 100 cool the substrate 200. In other instances, for example when the mycelium is ready for harvesting, the mycelium can be dried by having the heat exchanger 100 heat the substrate 200.

The structure 110 of the heat exchanger 100 is arranged for supporting the substrate 200, for thereby forming a carrier structure, e.g. a carrier plate with a carrier surface. Accordingly, contrary to conventional arrangements for cultivating horticultural products, there is no need for a separate carrier structure, and the total thermal mass of the arrangement, which may act as a heat sink or heat source, can be reduced. As a result, controllability of the temperature of the substrate 200 can be improved, and the energy efficiency of the heat exchanger 100 can be increased.

As illustrated in FIG 1, the heat exchange surface 110 forms the carrier surface for carrying the substrate 200. As such, when transferring heat between the heat exchanger 100 and the substrate 200, loss of energy is minimized, e.g. by minimizing the thermal mass between the heat exchanger 100 and the substrate 200. To further minimize thermal masses, the heat exchanger 100 comprises or is configured for cooperating with one or more mounts 120 arranged for suspending the heat exchanger 100 to a support structure, and the structure 110 of the heat exchanger 100 is constructed such as to be self-supporting for supporting the substrate 200 at least between the one or more mounts 120, e.g. in a rack.

For example, each mount 120 may have a contact area through which heat can be transferred, e.g. by conduction, between the heat exchanger 100 and the support structure when the heat exchanger 100 is suspended to the support structure. To limit transfer of heat between the heat exchanger and the support structure, the contact area may be relatively small. Alternatively, the number of mounts 120 may be reduced. For example, the total contact area of the one or more mounts 120 combined may be significantly smaller than the carrier surface area, e.g. less than 10% of the carrier surface area, preferably less than 5% of the carrier surface area.

According to the invention, the one or more mounts 120 are arranged along one or more edges of the heat exchanger 100, e.g. between opposing edges of the heat exchanger 100. The mounts 120 are arranged for rigidly suspending the heat exchanger 100. In embodiments not covered by the invention, the heat exchanger 100 may also be suspended movably, e.g. by comprising a clamping arrangement or a bearing arrangement, respectively, or by any combination of rigid and movable suspension arrangements.

The heat exchanger 100 is suspended as carrier plate between the mounts 120 for supporting the substrate 200, the structure 110 of the heat exchanger 100 is self-supporting. In this way, the bottom surface 112 of the structure 110 opposite the heat exchange surface 111 can face an ambient environment. In other words, the bottom surface 112 can be freely accessible from and/or be in direct contact with the ambient environment, because it is not substantially covered by supporting elements, such as plates or frames, by insulating material, or by grates. As such, e.g. when the heat exchanger 100 is suspended in a rack, the bottom surface 112 can for example be arranged for heating or cooling a substrate located on a level below the heat exchanger 100.

Preferably, the structure 110 forms an impervious barrier, arranged for preventing passage of substrate material, such as sand or dirt, through the structure 110, so that any horticultural products 50 cultivated on a level below the heat exchanger 100 are not contaminated by the substrate material.

During normal operating conditions, a gravitational load is exerted on the heat exchanger 100, e.g. comprising the own weight of the heat exchanger 100, the weight of substrate 200 and the weight of any horticultural products 50 cultivated thereon. The structure 110 may be self-supporting so that, e.g. under the gravitational load, the deformation of the heat exchanger 100, due to bending stress, is within an elastic deformation regime, while the deflection of the carrier surface is within a deflection threshold.

The structure 110 can for example be made of an aluminium alloy material, or any other material that has a relatively high thermal conductivity, Young's module and yield strength, versus a relatively low density, such as steel alloys, magnesium alloys, or brass alloys.

Alternatively, or additionally, the structure 110 can be designed to have a relatively high bending stiffness in a direction normal to the plane of the carrier surface, to minimalize deflection of the carrier surface due to gravitational loads. For example, the second moment of area of the structure 110, around an axis in plane P of the carrier plate, can be increased by maximizing the height of the structure 110 in a direction normal to the plane P of the carrier plate. As such, the out of plane bending resistance of the structure 110 can be increased. By maximizing the height H, the structure 110 can remain thin walled. In this way, the thermal resistance of the heat exchanger 100, for transferring heat between the heat exchanger 100 and the substrate 200, can be minimalized.

A further synergistic effect of maximizing the height H while minimizing the wall thickness of the structure 110 is that the mass of the heat exchanger 100, and thus the gravitational load as well as the thermal mass, can be reduced. Accordingly, the structure 110 of the heat exchanger 100 can provide improved mechanical properties, for supporting the substrate 200, as well as improved thermal properties, for exchanging heat with the substrate 200.

FIG 2 illustrates a cross sectional view of an embodiment of a heat exchanger 100, wherein the structure 110 comprises one or more support members 118 that provide structural integrity in a lateral direction, parallel to the plane P of the carrier plate. The support members 118, such as beams, bars, brackets, or plates, can be arranged at an offset to the plane P to support the bottom surface 112, e.g. directly or via intermediate bushings. The one or more support members 118 may span between longitudinal edges of the carrier plate, between lateral edges of the carrier plate, and/or between corners of the carrier plate. Since the bottom surface 112 of the structure 110 opposite the heat exchange surface 111 is intended to face an ambient environment, the one or more support members 140 may be relatively slender, to minimally obstruct the bottom surface 111, as shown in FIG 3. For example, the support member 118 can comprise a folded plate, e.g. with a U profile having legs oriented perpendicular to the plane P of the carrier plate. The support member 118 can be provided with alignment means, such as cutouts or protrusions, for aligning the carrier plate with the support member.

As illustrated in FIG 2, the structure 110 can further comprise an extendible section 115. The extendible section is configured to extend or shorten in plane P of the carrier plate for compensating thermally induced contraction or expansion of the heat exchanger 100, respectively. For example, when the heat exchanger 100 heats up the substrate 200, the structure 110 may expand in plane P of the carrier plate. Since the expansion of the structure 110 may be laterally constrained, e.g. due to the fixation of the heat exchanger 100 to a rack or other support structure, thermally induced stress may build up inside the structure, which can cause irreversible damage to the heat exchanger 100. In such cases, the extendible section 115 can shorten, e.g. by elastic deformation thereof, to compensate for thermally induced expansion, thereby preventing the building up of stress inside the structure 110. The extendible section 115 can e.g. have a relatively low stiffness in plane P of the carrier plate, compared to the rest of the structure 110. For example, the extendible section 115 can comprise a biasing element, arranged for exerting a preload force in plane P of the carrier plate. The biasing element can e.g. be integrated in the structure 110, when the extendible section 115 has a wall that is corrugated and relatively thin, e.g. forming a bellows. Alternatively, or additionally, at least one of the mounts 120 can comprise a biasing element, or be elastically deformable, in plane P of the carrier plate.

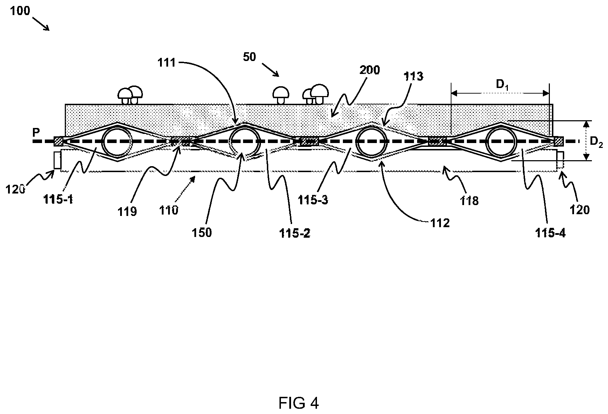

FIG 4 provides a cross sectional view of an embodiment of a heat exchanger 100, in which the structure comprises a number of compartments 115-1,..., 115-N, e.g. two or more than two compartments 115. Here, the extendible section is formed by the compartments 115. The heat exchange surface 111 and the bottom surface are corrugated, folded or bent, thereby providing an elastically deformable mechanism in plane P of the carrier plate.

Each compartment can comprise a circumferential wall with a top portion, e.g. providing the heat exchange surface 111, and a bottom portion, e.g. providing the bottom surface 112. The top portion and the bottom portion may be interconnected at respective opposing end sections thereof in plane P of the carrier plate. Each of the top and bottom portion can comprise a middle section that is bent outwards with respect to the plane P of the carrier plate. Accordingly, each compartment may comprise an eye-shaped, or diamond shaped cross section, e.g. a cross section that has a long diagonal D₁ and a short diagonal D₂. The long diagonal D₁ can e.g. be in plane P of the carrier plate, while the short diagonal D₂ can be perpendicular to the plane P of the carrier plate. As such, thermal expansion of the heat exchanger 100 in plane P of the carrier plate can be compensated by shortening of the long diagonal D₁ and expansion of the short diagonal D₂. Alternatively, the long and short diagonals D₁, D₂ may be at an angle with respect to the plane P of the carrier plate, e.g. to reduce the expansion of the short diagonal D₂ when the heat exchanger 100 thermally expands in plane P of the carrier plate.

By reducing the thickness of the circumferential outer wall 113, the thermal mass of the heat exchanger 100 can be reduced, thereby optimizing its efficiency. Moreover, in combination with having a corrugated, folded or bent circumferential outer wall 113, the stiffness of the compartment 115 in plane P of the carrier plate can be decreased, thereby increasing the flexibility of the compartment. In this way, the compartment 115 can extend or shorten in plane P of the carrier plate for compensating thermally induced contraction or expansion of the heat exchanger, by elastic deformation of the. Instead of all compartments 115-1,..., 115-N having the same circumferential outer wall 113 design, one or more compartments may have a circumferential outer wall 113 with a relatively low stiffness in plane P of the carrier plate, while other compartments may have a circumferential outer wall 113 with a relatively high stiffness in plane P of the carrier plate. This can e.g. be achieved by varying the wall thickness of the circumferential outer wall 113 between compartments 115. Accordingly, a selected one or more compartments 115 are arranged for forming the extendible section, thus with increased flexibility for compensating thermal expansion of the heat exchanger 100, while other compartments are e.g. designed for structural integrity.

The compartments 115 can be interconnected by elastic elements 119, that are elastically deformable in plane P of the carrier plate. Accordingly, the seams between compartments, of which the width can be larger or smaller depending on the temperature of the compartments 115, can be sealed by the elastic elements to provide an impervious carrier plate for preventing passage of substrate material through the structure 110.

The elastic elements can e.g. be made of a bent metal plate or hollow profile, such as a U-profile or an O-profile, to form a thermally conductive, yet elastically deformable connection between compartments 115. Alternatively, the elastic elements 119 can be made of a polymer or rubber material, forming an insulating connection between compartments 115. The heat exchanger 100 can also circumferentially be provided with one or more elastically deformable elements 119, while the compartments are rigidly interconnected, e.g. by a welded or brazed connection.

As illustrated in FIG 4, each compartment 115-1,..., 115-N can be provided with a channel 150, through which a fluid can flow for heating or cooling the heat exchange surface 111. The channels 150 can for example be made of a material with good thermal conductive properties, e.g. a metal such as an aluminium, steel or copper alloy. The channel 150 can e.g. be made of the same material as the structure 110, or at least as the same material as the circumferential outer wall 113. The wall of the channel 150 may be thermally coupled to the circumferential outer wall 113. When a cooling or heating fluid, such as water or oil, is direct through a channel 150, heat is transferred between the fluid and the substrate 200 via the channel wall and the circumferential outer wall 113. Alternatively, each compartment 115 can itself form a channel for directing a fluid for heating or cooling the heat exchange surface 111.

The channels 150 can e.g. be part of an energy recovery system, for recovering energy from heat produced by the substrate 200. For example, when cultivating mycelium, heat is produced in the substrate 200 which can be recovered by transferring the heat to a cooling fluid passing through the channels 150. The energy transferred to the cooling fluid can be stored and reused by the energy recovery system, e.g. for heating up a mycelium substrate during its harvesting phase.

FIG 5 illustrates a substrate drawer 300, provided with a heat exchanger 100 as described herein. The carrier plate of the heat exchanger 100 is suspended to drawer walls 180. Accordingly, a drawer is formed for containing the substrate 200 and horticultural products 50 cultivated thereon, such as mycelium. The drawer walls 180 are movably mountable to a rack, e.g. by having a bearing arrangement 120 provided on the drawer walls 180. The bearing arrangement may for instance include a planar bearing profile or roller bearings, that engage with respective roller bearings or bearing profiles on the rack. Alternatively, a bearing arrangement can be provided directly on the heat exchanger 100, e.g. on the structure 110 or on the support member 118, for movably mounting the heat exchanger 100 to the rack. The one or more mounts 120, for movably mounting the heat exchanger to the rack, may comprise at least one of: bearings, rails or a carriage or sled.

FIGs 6 and 7 illustrate four-level racks 500, wherein each level is provided with a heat exchanger 100 as described herein. In FIG 6 the heat exchangers 100 are directly suspended to the rack 500, by opposing mounts 120. In FIG 7, each heat exchanger 100 is provided in a substrate drawer 300, which in turn is suspended in the rack 500 by opposing bearing arrangements 120.

As described herein, the structure 110 of the heat exchanger 100 is self-supporting for supporting the substrate 200 between the opposing mounts or bearing arrangements 120, such that a bottom surface 112 of the structure 110 opposite the heat exchange surface 111 faces an ambient environment, e.g. an environment between adjacent levels of the rack 500.

The bottom side of the heat exchanger 100, e.g. the bottom surface 112, can be provided with a light source 190, such as a LED or UV light source, as illustrated in FIG 6. The light source 190 can e.g. be integrated in the bottom surface 112. Accordingly, the lighting conditions of a lower level substrate and horticultural products 50 cultivated thereon can be controlled. Beneficially, by having the light source 190 directly mounted to or integrated in the bottom side of the heat exchanger 100, waste heat produced by the light source 190 can be dissipated or recovered by the heat exchanger 100. For example, waste heat produced by the light source 190 can be used for heating up the substrate 200, so that less transfer of heat is needed from a heating fluid of the heat exchanger. As such, the efficiency of the heat exchanger 100 can be improved. In contrast, in conventional racks the lighting source is mounted to a bottom plate, which is thermally insulated from the heat exchanger and/or the substrate, and therefore may not contribute to the efficiency of the heat exchanger.

As shown in FIGs 6 and 7, the rack may additionally comprise an energy recovery system 400 that is connectable to the heat exchangers 100, for recovering energy from fluid, such as water or oil, obtained from the heat exchangers 100. In this way, the efficiency of the heat exchangers can further be improved.

It is thus believed that the operation and construction of the present invention will be apparent from the foregoing description and drawings appended thereto. For the purpose of clarity and a concise description features are described herein as part of the same or separate embodiments. The invention is only limited by the scope of the appended claims.

## Claims

1. A rack (500) for carrying a substrate (200) for cultivating horticultural products (50), wherein the rack is provided with a heat exchanger (100) for temperature control of the substrate, the heat exchanger having a structure (110) comprising a heat exchange surface (111) arranged for heating or cooling the substrate, wherein the structure (110) is arranged for supporting the substrate for thereby forming a carrier plate with a carrier surface such that the heat exchange surface forms the carrier surface, **characterized in that** mounts (120) suspend the heat exchanger (100) at or along its edges to the rack, and wherein the structure (110) of the heat exchanger is constructed such as to be self-supporting for supporting the substrate at least between the one or more mounts without additional support elements below the heat exchanger, such that a bottom surface (112) of the structure opposite the heat exchange surface (111) faces an ambient environment, wherein the structure (110) comprises an extendible section (115), configured to extend or shorten laterally in plane of the carrier plate between the mounts for compensating thermally induced contraction or expansion of the heat exchanger, respectively.

2. Rack (500) according to claim 1, wherein the structure (110) of the heat exchanger comprises one or more support members (118), wherein the one or more support members provide structural integrity in a direction parallel to the plane of the carrier plate.

3. Rack (500) according to any of the preceding claims, wherein the structure (110) forms an impervious barrier, arranged for preventing passage of substrate material through the structure.

4. Rack (500) according to any of the preceding claims, wherein the extendible section (115) is configured to extend or shorten by elastic deformation thereof.

5. Rack (500) according to claim 4, wherein the structure (110) comprises at least two compartments, wherein the extendible section (115) is formed by at least one compartment of the at least two compartments.

6. Rack (500) according to claim 5, wherein each compartment (115) of the at least two compartments comprises a circumferential outer wall (113), providing the heat exchange surface (111).

7. Rack (500) according to claim 6, wherein the circumferential outer wall (113) comprises a top portion and a bottom portion, wherein the top portion and the bottom portion are interconnected at respective opposing end sections thereof in plane of the carrier plate, and wherein each of the top and bottom portion comprises a middle section that is bent outwards with respect to the plane of the carrier plate.

8. Rack (500) according to claim 7, wherein the circumferential outer wall (113) has a diamond shaped cross section, having a long diagonal and a short diagonal, wherein the long diagonal is in plane of the carrier plate and wherein the short diagonal is perpendicular to the plane of the carrier plate.

9. Rack (500) according to claim 8, wherein at least one of:
- the at least two compartments (115) are interconnected by elastic elements (119), that are elastically deformable in plane of the carrier plate; and
- the heat exchanger (100) is circumferentially provided with one or more elastically deformable elements (119); wherein the at least two compartments (115) are rigidly interconnected.

10. Rack (500) according to any of claims 5-9, wherein each compartment (115) of the at least two compartments comprises a channel (150), through which a fluid can flow for heating or cooling the heat exchange surface (111).

11. Rack (500) according to claim 10, wherein the channel (150) is connectable to an energy recovery system, the energy recovery system being arranged for recovering energy from heat produced by the substrate.

12. Rack (500) according to any of the preceding claims, wherein the structure (110) comprises one or more walls (180) mounted to the carrier plate.

13. Rack (500) according to any of the preceding claims, wherein the one or more mounts (120), for movably mounting the heat exchanger to the rack, comprise at least one of: bearings, rails or a carriage or sled.

14. Rack (500) according to any of the preceding claims, wherein a bottom side of the heat exchanger is provided with a light source (190).

## Patentansprüche

1. Gestell (500) zum Tragen eines Substrats (200) zur Kultivierung von Gartenbauprodukten (50), wobei das Gestell mit einem Wärmetauscher (100) zur Temperaturregelung des Substrats bereitgestellt ist, wobei der Wärmetauscher eine Struktur (110) hat, mit einer Wärmeaustauschfläche (111), die zum Erwärmen oder Kühlen des Substrats angeordnet ist, wobei die Struktur (110) zum Stützen des Substrats angeordnet ist, um dadurch eine Trägerplatte mit einer Trägerfläche zu bilden, sodass die Wärmeaustauschfläche die Trägerfläche bildet, **dadurch gekennzeichnet, dass** Halterungen (120) den Wärmetauscher (100) an oder entlang seiner Ränder an dem Gestell aufhängen, und wobei die Struktur (110) des Wärmetauschers so konstruiert ist, dass sie selbsttragend ist, um das Substrat zumindest zwischen der einen oder den mehreren Halterungen ohne zusätzliche Stützelemente unterhalb des Wärmetauschers zu stützen, sodass eine der Wärmeaustauschfläche (111) gegenüberliegende Unterseite (112) der Struktur einem Umgebungsraum zugewandt ist, wobei die Struktur (110) einen ausdehnbaren Abschnitt (115) aufweist, der dazu konfiguriert ist, sich in der Ebene der Trägerplatte zwischen den Halterungen lateral auszudehnen oder zu verkürzen, um jeweils thermisch bedingte Kontraktion oder Ausdehnung des Wärmetauschers auszugleichen.

2. Gestell (500) nach Anspruch 1, wobei die Struktur (110) des Wärmetauschers ein oder mehrere Stützelemente (118) aufweist, wobei das eine oder die mehrere Stützelemente strukturelle Integrität in einer Richtung parallel zu der Ebene der Trägerplatte bereitstellen.

3. Gestell (500) nach einem der vorstehenden Ansprüche, wobei die Struktur (110) eine undurchlässige Barriere bildet, die angeordnet ist, um den Durchgang von Substratmaterial durch die Struktur zu verhindern.

4. Gestell (500) nach einem der vorstehenden Ansprüche, wobei der ausdehnbare Abschnitt (115) dazu konfiguriert ist, sich durch elastische Verformung auszudehnen oder zu verkürzen.

5. Gestell (500) nach Anspruch 4, wobei die Struktur (110) mindestens zwei Kammern aufweist, wobei der ausdehnbare Abschnitt (115) durch mindestens eine Kammer der mindestens zwei Kammern gebildet ist.

6. Gestell (500) nach Anspruch 5, wobei jede Kammer (115) der mindestens zwei Kammern eine umlaufende Außenwand (113) aufweist, die die Wärmeaustauschfläche (111) bereitstellt.

7. Gestell (500) nach Anspruch 6, wobei die umlaufende Außenwand (113) einen oberen Abschnitt und einen unteren Abschnitt aufweist, wobei der obere Abschnitt und der untere Abschnitt an jeweiligen gegenüberliegenden Endabschnitten davon in der Ebene der Trägerplatte miteinander verbunden sind, und wobei jeder von dem oberen und dem unteren Abschnitt einen mittleren Bereich aufweist, der in Bezug auf die Ebene der Trägerplatte nach außen gebogen ist.

8. Gestell (500) nach Anspruch 7, wobei die umlaufende Außenwand (113) einen rautenförmigen Querschnitt mit einer langen Diagonale und einer kurzen Diagonale aufweist, wobei die lange Diagonale in der Ebene der Trägerplatte liegt und wobei die kurze Diagonale senkrecht zu der Ebene der Trägerplatte verläuft.

9. Gestell (500) nach Anspruch 8, wobei mindestens eines der folgenden Merkmale vorliegt:
- die mindestens zwei Kammern (115) sind durch elastische Elemente (119) miteinander verbunden, die in der Ebene der Trägerplatte elastisch verformbar sind; und
- der Wärmetauscher (100) ist umlaufend mit einem oder mehreren elastisch verformbaren Elementen (119) bereitgestellt; wobei die mindestens zwei Kammern (115) starr miteinander verbunden sind.

10. Gestell (500) nach einem der Ansprüche 5 bis 9, wobei jede Kammer (115) der mindestens zwei Kammern einen Kanal (150) aufweist, durch den ein Fluid zum Erwärmen oder Kühlen der Wärmeaustauschfläche (111) strömen kann.

11. Gestell (500) nach Anspruch 10, wobei der Kanal (150) mit einem Energierückgewinnungssystem verbindbar ist, wobei das Energierückgewinnungssystem angeordnet ist, um Energie aus der von dem Substrat erzeugten Wärme zurückzugewinnen.

12. Gestell (500) nach einem der vorstehenden Ansprüche, wobei die Struktur (110) eine oder mehrere Wände (180) aufweist, die an der Trägerplatte montiert sind.

13. Gestell (500) nach einem der vorstehenden Ansprüche, wobei die eine oder mehrere Halterungen (120) zum beweglichen Montieren des Wärmetauschers an dem Gestell mindestens eines aufweist von: Lager, Schienen oder einem Wagen oder Schlitten.

14. Gestell (500) nach einem der vorstehenden Ansprüche, wobei eine Unterseite des Wärmetauschers mit einer Lichtquelle (190) bereitgestellt ist.

## Revendications

1. Crémaillère (500) pour porter un substrat (200) pour la culture de produits horticoles (50), dans laquelle la crémaillère est pourvue d'un échangeur de chaleur (100) pour réguler la température du substrat, l'échangeur de chaleur ayant une structure (110) comprenant une surface d'échange de chaleur (111) agencée pour chauffer ou refroidir le substrat, dans laquelle la structure (110) est agencée pour supporter le substrat pour former ainsi une plaque portante avec une surface portante, de sorte que la surface d'échange de chaleur forme la surface portante, **caractérisée en ce que**
des montants (120) suspendent l'échangeur de chaleur (100) sur la crémaillère ou le long de ses bords, et dans laquelle la structure (110) de l'échangeur de chaleur est conçue de manière à être autoportante pour supporter le substrat au moins entre les un ou plusieurs montants sans éléments de support supplémentaires sous l'échangeur de chaleur, de sorte qu'une surface de dessous (112) de la structure opposée à la surface d'échange de chaleur (111) soit tournée vers un environnement ambiant, dans laquelle la structure (110) comprend une section extensible (115) configurée pour s'étendre ou se raccourcir latéralement dans le plan de la plaque portante entre les montants pour compenser respectivement une contraction ou une dilatation de l'échangeur de chaleur induite thermiquement.

2. Crémaillère (500) selon la revendication 1, dans laquelle la structure (110) de l'échangeur de chaleur comprend un ou plusieurs organes de support (118), dans laquelle les un ou plusieurs organes de support assurent l'intégrité structurelle dans une direction parallèle au plan de la plaque portante.

3. Crémaillère (500) selon l'une des revendications précédentes, dans laquelle la structure (110) forme une barrière imperméable agencée pour empêcher le passage d'un matériau de substrat à travers la structure.

4. Crémaillère (500) selon l'une des revendications précédentes, dans laquelle la section extensible (115) est configurée pour s'étendre ou se raccourcir par déformation élastique.

5. Crémaillère (500) selon la revendication 4, dans laquelle la structure (110) comprend au moins deux compartiments, dans laquelle la section extensible (115) est formée par au moins un compartiment des au moins deux compartiments.

6. Crémaillère (500) selon la revendication 5, dans laquelle chaque compartiment (115) des au moins deux compartiments comprend une paroi extérieure circonférentielle (113) fournissant la surface d'échange de chaleur (111).

7. Crémaillère (500) selon la revendication 6, dans laquelle la paroi extérieure circonférentielle (113) comprend une partie de dessus et une partie de dessous, dans laquelle la partie de dessus et la partie de dessous sont interconnectées à ses sections d'extrémité opposées respectives dans le plan de la plaque portante, et dans laquelle chacune des parties de dessus et de dessous comprend une section médiane qui est courbée vers l'extérieur par rapport au plan de la plaque portante.

8. Crémaillère (500) selon la revendication 7, dans laquelle la paroi extérieure circonférentielle (113) a une section transversale en forme de losange ayant une diagonale longue et une diagonale courte, la diagonale longue se trouvant dans le plan de la plaque portante et la diagonale courte étant perpendiculaire au plan de la plaque portante.

9. Crémaillère (500) selon la revendication 8, dans laquelle :
- les au moins deux compartiments (115) sont interconnectés par des éléments (119) élastiques qui sont déformables élastiquement dans le plan de la plaque portante ; et/ou
- l'échangeur de chaleur (100) est muni sur sa circonférence d'un ou plusieurs éléments (119) déformables élastiquement ; dans laquelle les au moins deux compartiments (115) sont interconnectés de manière rigide.

10. Crémaillère (500) selon l'une des revendications 5 à 9, dans laquelle chaque compartiment (115) des au moins deux compartiments comprend un canal (150) à travers lequel un fluide peut s'écouler pour chauffer ou refroidir la surface d'échange de chaleur (111).

11. Crémaillère (500) selon la revendication 10, dans laquelle le canal (150) peut être connecté à un système de récupération d'énergie, le système de récupération d'énergie étant agencé pour récupérer l'énergie provenant de la chaleur produite par le substrat.

12. Crémaillère (500) selon l'une des revendications précédentes, dans laquelle la structure (110) comprend une ou plusieurs parois (180) montées sur la plaque portante.

13. Crémaillère (500) selon l'une des revendications précédentes, dans laquelle les un ou plusieurs montants (120) servant à monter de manière mobile l'échangeur de chaleur sur la crémaillère comprennent au moins un parmi : des paliers, des rails, un chariot ou un traîneau.

14. Crémaillère (500) selon l'une des revendications précédentes, dans laquelle un côté de dessous de l'échangeur de chaleur est pourvu d'une source lumineuse (190).
